# FASCICULE DE BREVET EUROPEEN

(11) **EP 3 726 268 B1**
(45) Date de publication et mention de la délivrance du brevet: **25.03.2026**
(21) Numéro de dépôt: 20169780.2
(22) Date de dépôt: 16.04.2020
(51) Int. Cl.: G02B 7/00, G02B 26/08, B81B 3/00, G01S 17/00, G02B 5/02

(54) **DISPOSITIF REFLECTEUR**
REFLEKTORVORRICHTUNG
REFLECTOR DEVICE

(30) Priorité: 18.04.2019 FR 1904137
(43) Date de publication de la demande: 21.10.2020
(73) Titulaire: Commissariat à l'Energie Atomique et aux Energies Alternatives, 75015 Paris (FR)
(72) Inventeur: MOLLARD, Laurent, 38054 GRENOBLE CEDEX 09 (FR); DIEPPEDALE, Christel, 38054 GRENOBLE CEDEX 09 (FR); FREY, Laurent, 38054 GRENOBLE CEDEX 09 (FR); GARDIEN, François, 38054 GRENOBLE CEDEX 09 (FR); HUE, Jean, 38054 GRENOBLE CEDEX 09 (FR)
(74) Mandataire: Santarelli

(56) Documents cités:
- JP-A- 2005 337 715
- US-A- 4 415 234
- US-A1- 2006 033 980

## Description

### DOMAINE TECHNIQUE

L'invention concerne un dispositif réflecteur, et notamment un dispositif réflecteur subissant peu ou pas d'échauffement en fonctionnement. À cet égard, le dispositif réflecteur comprend un miroir partiellement transparent et en arrière duquel sont disposés des moyens de diffusion thermique et/ou d'absorption.

### ÉTAT DE LA TECHNIQUE ANTÉRIEURE

Les micro-miroirs sont aujourd'hui largement présents dans le domaine des MEMS et en particulier dans les dispositifs de type LIDAR (« Light Detection And Ranging systems »).

Ces derniers permettent notamment de balayer une surface ou une cible avec un rayonnement lumineux à des fins de détection ou d'imagerie.

À cet égard, dans ces dispositifs de type LIDAR, les micro-miroirs sont agencés pour osciller selon un ou deux axe(s) pivot(s), à une fréquence de battement prédéterminée, de manière à réfléchir un rayonnement incident selon différentes directions.

La fréquence de battement des micro-miroirs peut varier de quelques Hz à plusieurs kHz, et leur taille peut être de l'ordre de quelques millimètres (par exemple quelques millimètres de diamètre pour des micro-miroirs en forme de disque), et peut notamment être comprise entre 1 mm et 3 mm.

Selon un exemple connu de l'état de la technique, un micro-miroir peut comprendre une couche réflective métallique formée sur une face principale d'un support, par exemple un support fait de silicium, et notamment de silicium monocristallin.

La couche réflective métallique peut en particulier comprendre une couche d'or ou d'aluminium d'une épaisseur comprise entre 50 nm et 500 nm.

Toutefois, cette configuration n'est pas satisfaisante.

En effet, la couche réflective métallique présente un coefficient d'absorption du rayonnement lumineux non négligeable de sorte qu'en fonctionnement, notamment lorsque la puissance du rayonnement incident est importante, un échauffement du micro-miroir est observé.

Cet effet peut exister lorsque le rayonnement lumineux est dans le domaine infrarouge et notamment de longueur d'onde λ = 1550 nm.

À titre d'exemple, à cette longueur d'onde, un micro-miroir comprenant une couche métallique réflective présentant un coefficient de réflexion de 96 % et un coefficient d'absorption de 4 % pourra subir une augmentation de température suffisante pour conduire à la destruction thermomécanique du miroir

Également, et dans des conditions équivalentes, un micro-miroir comprenant une couche métallique réflective présentant un coefficient de réflexion de 98 % et un coefficient d'absorption de l'ordre de 2 % pourra subir un échauffement « théorique » à une température voisine de 2000 °C au bout d'une centaine de secondes

Or de tels échauffements détériorent les micro-miroirs.

Afin de pallier ce problème, il a été considéré de remplacer la couche réflective métallique par un empilement réflecteur de Bragg tel que décrit dans le document [1] cité à la fin de la description, afin d'augmenter le seuil d'endommagement laser de ces composants optiques.

Un tel empilement réflecteur de Bragg comprend en général une pluralité d'empilements réflecteurs élémentaires agencés pour réfléchir un rayonnement d'une longueur d'onde prédéterminée dite longueur de Bragg. À titre d'exemple, un empilement de Bragg, destiné à fonctionner à la longueur de Bragg égale à 1550 nm, peut comprendre une couche de silicium amorphe de 110 nm d'épaisseur et une couche de dioxyde de silicium de 305 nm d'épaisseur.

L'empilement réflecteur de Bragg est peu ou pas absorbant de sorte qu'aucun échauffement du micro-miroir n'est constaté.

Cependant, cette configuration n'est pas non plus satisfaisante.

En effet, afin de maximiser le coefficient de réflexion de l'empilement réflecteur de Bragg, ce dernier comprend en général un nombre important d'empilements réflecteurs élémentaires qui peuvent être à l'origine de déformations dues aux contraintes mécaniques imposées par la multiplication des couches. La multiplication des empilements élémentaires complique également le procédé de fabrication d'un tel réflecteur.

La considération d'un nombre réduit d'empilements réflecteurs élémentaires affecte le coefficient de réflexion du micro-miroir. Notamment, ce dernier, qui est partiellement transparent, transmet une partie du rayonnement lumineux.

Un but de la présente invention est donc de proposer un dispositif optique pourvu d'un micro-miroir susceptible de fonctionner à des puissances de rayonnement incident plus élevées que les miroirs métalliques usuels, c'est-à-dire avec un seuil d'endommagement laser plus élevée aussi bien à court terme qu'à long terme.

Un autre but de la présente invention est également de proposer un dispositif optique pourvu d'un micro-miroir et agencé pour limiter les déformations dudit miroir.

Le document JP2005337715 décrit un filtre passe-bande pour la spectroscopie Raman.

### EXPOSÉ DE L'INVENTION

Les buts de la présente invention sont, au moins en partie, atteints par un dispositif réflecteur destiné à réfléchir un rayonnement lumineux de longueur d'onde λ, supérieure à 1250 nm, notamment égale à 1550 nm, le dispositif est pourvu d'un support sur lequel sont assemblés :
- un miroir partiellement transparent, et présentant une face avant partiellement réfléchissante ;
- des moyens de diffusion et/ou d'absorption du rayonnement lumineux configurés pour diffuser et/ou absorber, de manière directe, un rayonnement lumineux susceptible d'être transmis par une face arrière, opposée à la face avant.

Les moyens de diffusion et/ou d'absorption sont disposés en regard et à distance de la face arrière.

Selon un mode de mise en œuvre, les moyens de diffusion et/ou d'absorption comprennent :
- une couche de diffusion lumineuse, avantageusement une couche métallique, ou
- une couche d'absorption, avantageusement la couche d'absorption par exemple une couche métallique, ou
- une couche formée de nanotubes de carbone, ou
- un dissipateur thermique qui comprend un matériau massif par exemple du carbone, du métal et structuré ou non pour dissiper la chaleur, ou
- une couche anti-réflexion, avantageusement disposée sur des moyens configurés pour dissiper de la chaleur.

Selon un mode de mise en œuvre, les moyens de diffusion comprennent une série de premières lames de prélèvement, essentiellement plates ou incurvées (permettant auxdites premières lames de prélèvement d'être divergentes), dites premières lames, lesdites premières lames de prélèvement étant pourvues chacune d'une première face avant et d'une première face arrière opposée à la première face avant. Ces premières lames sont alignées selon une direction d'alignement, parallèles les unes aux autres, et orientées de manière à réfléchir partiellement le rayonnement lumineux susceptible d'être transmis par la face arrière, en direction d'un premier dissipateur (dissipateur thermique).

Ces premières lames peuvent être très transparentes et très peu absorbantes. Par exemple, les premières lames peuvent permettre de réfléchir quelques pourcents (par exemple 8%) d'un rayonnement incident et en transmettre quelques dizaines de pourcents (par exemple 92 %) Les premières lames peuvent comprendre du verre par exemple un verre du type B1664, ou BK7. L'invention n'est toutefois pas limitée à ces deux exemples.

Selon un mode de mise en œuvre, l'au moins un premier dissipateur est disposé perpendiculairement à la face avant du miroir.

Selon un mode de mise en œuvre, les premières lames de prélèvement sont en outre partiellement transparents de sorte que la première face avant de chacun d'entre se voit exposée au rayonnement lumineux susceptible d'être transmis par la face arrière et traversant la première lame de prélèvement qui la précède sur le trajet du rayonnement.

Selon un mode de mise en œuvre, les moyens de diffusion comprennent une série de deuxièmes lames de prélèvement, par exemple de même nature que les premières lames de prélèvement, essentiellement plates ou incurvées (permettant auxdites premières lames de prélèvement d'être divergentes), dites premières lames, pourvus chacune d'une deuxième face avant et d'une deuxième face arrière opposée à la deuxième face avant, les deuxièmes lames de prélèvement étant alignées selon une direction d'alignement, parallèles les unes aux autres, et orientées de manière à réfléchir en partie, et en direction d'un deuxième dissipateur, le rayonnement lumineux susceptible d'être transmis par la face arrière.

Selon un mode de mise en œuvre, les premières lames de prélèvement et les deuxièmes lames de prélèvement sont disposées en alternance le long de la direction d'alignement.

Il est possible selon la présente invention de considérer d'autres séries de lames de prélèvement, par exemple de même nature que les premières lames de prélèvement. Les lames de prélèvement au sien d'une série peuvent également être alignées selon une direction d'alignement, parallèles les unes aux autres, et orientées de manière à réfléchir en partie, et en direction d'un autre dissipateur. Le premier dissipateur, le deuxième dissipateur ainsi que les autres dissipateurs susceptibles d'être considérés peuvent être disposé autour de la direction d'alignement (autrement dit la direction de propagation du rayonnement lumineux issue de la face arrière du micro-miroir). Par exemple, si trois dissipateurs devaient être considérés, la normale de ces derniers pourrait être disposée angulairement à 120° les uns des autres autour de l'axe d'alignement. Il est possible de généraliser ce concept à N dissipateurs disposés angulairement à 360°/N autour de l'axe d'alignement.

Le dispositif peut également comprendre au moins une première lentille divergente qui s'interpose entre une première face avant (d'une première lame de prélèvement) et le premier dissipateur de manière à étaler le rayonnement réfléchi par ladite première face vers ledit premier dissipateur.

De manière équivalente, le dispositif peut également comprendre au moins une deuxième lentille divergente qui s'interpose entre une deuxième face avant (d'une deuxième lame de prélèvement) et le deuxième dissipateur de manière à étaler le rayonnement réfléchi par ladite deuxième face vers ledit deuxième dissipateur.

Selon un mode de mise en œuvre, les premières lames de prélèvement sont disposées perpendiculairement aux deuxièmes lames de prélèvement.

Selon un mode de mise en œuvre, le miroir comprend de sa face avant vers sa face arrière, une couche partiellement réfléchissante et une couche support mécanique, lesdites couches présentant, chacune, un coefficient d'absorption à la longueur d'onde λ inférieur à 0,1%, avantageusement nul.

Selon un mode de mise en œuvre, la couche partiellement réfléchissante comprend un empilement de Bragg, l'empilement de Bragg comprenant au moins un empilement de Bragg élémentaire.

Selon un mode de mise en œuvre, un empilement de Bragg élémentaire comprend un empilement de deux couches diélectriques et/ou semi-conductrices, avantageusement un empilement de Bragg élémentaire comprend une couche de dioxyde de silicium et une couche de silicium amorphe.

Selon un mode de mise en œuvre, l'empilement de Bragg est limité à un ou deux empilements de Bragg élémentaires.

L'invention n'est toutefois pas limitée à la mise en œuvre d'un ou deux empilements de Bragg élémentaire, et il pourra être considéré un nombre d'empilements plus important dans la mesure où la problématique de courbure du miroir est contrôlée.

Selon un mode de mise en œuvre, la couche support mécanique comprend un matériau semi-conducteur, avantageusement du silicium, encore plus avantageusement du silicium monocristallin.

Selon un mode de mise en œuvre, une couche, dite d'adaptation d'impédance, est configurée pour limiter des réflexions internes du rayonnement lumineux au sein du miroir.

Selon un mode de mise en œuvre, ledit dispositif est un dispositif LIDAR.

### BRÈVE DESCRIPTION DES DESSINS

D'autres caractéristiques et avantages apparaîtront dans la description qui va suivre d'un dispositif réflecteur selon l'invention, donnés à titre d'exemples non limitatifs, en référence aux dessins annexés dans lesquels :
- la figure 1 est une représentation schématique, selon un premier mode de mise en œuvre de la présente invention ;
- la figure 2 est une représentation schématique, selon un second mode de mise en œuvre de la présente invention ;
- la figure 3 est une représentation schématique, selon un troisième mode de mise en œuvre de la présente invention ;
- la figure 4 est une représentation schématique, selon un quatrième mode de mise en œuvre de la présente invention ;
- la figure 5 est une représentation schématique, selon un cinquième mode de mise en œuvre de la présente invention ;
- la figure 6 est une représentation schématique, selon un sixième mode de mise en œuvre de la présente invention ;
- les figures 7a à 7g sont des représentations schématiques d'un exemple de procédé de fabrication d'un miroir
- la figure 8 est une représentation schématique, selon un septième mode de mise en œuvre de la présente invention ;
- la figure 9 est une représentation schématique d'une variante du septième mode de mise en œuvre de la présente invention.

### EXPOSÉ DÉTAILLÉ DE MODES DE RÉALISATION PARTICULIERS

La présente invention concerne un dispositif réflecteur pourvu d'un miroir (ou micro-miroir) destiné à réfléchir un rayonnement lumineux de puissances optiques moyennes et instantanées plus élevées que les micro-miroirs métalliques usuels sans subir d'élévation de température notable et/ou susceptible de dégrader ses performances, c'est à dire avec des seuils d'endommagement lasers plus élevés que les micro-miroirs usuels.

La présente invention met donc en œuvre un miroir peu ou pas absorbant du rayonnement lumineux, couplé à des moyens de dissipation thermique du flux lumineux susceptible d'être transmis par ce miroir.

Tout au long de la description et dans les revendications, l'expression « diffusion de lumière » pourra être utilisée de manière indifférente pour décrire tant une diffusion qu'une absorption d'un rayonnement lumineux, ou encore une déflexion dudit rayonnement ou encore une dissipation thermique.

Par « diffuser », on entend la déviation dans plusieurs directions d'un rayonnement lumineux.

Par « absorber », on entend la transformation de l'énergie portée par le rayonnement lumineux en une autre forme d'énergie de manière à dissiper cette dernière.

Par « coefficient d'absorption » on entend la proportion d'énergie incidente, portée par le rayonnement lumineux, absorbée

Par « coefficient de réflexion » on entend la proportion d'énergie incidente, portée par le rayonnement lumineux, réfléchie

Par « coefficient de transmission » on entend la proportion d'énergie incidente, portée par le rayonnement lumineux, transmise

Par « déflexion », on entend des moyens configurés pour réorienter la réflexion du rayonnement transmis dans une direction autre qu'une face arrière du miroir.

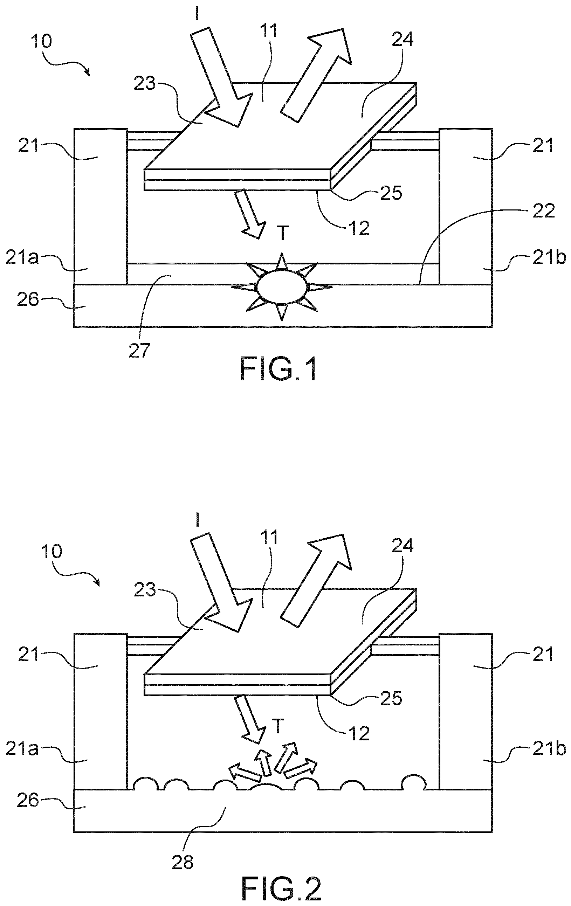

Les figures 1 à 6 illustrent différents modes de mise en œuvre d'un dispositif réflecteur 10 selon la présente invention.

Le dispositif réflecteur 10 peut comprendre des moyens de maintien 21, par exemple deux montants 21a et 21b, destinés à maintenir un miroir 23 partiellement transparent au regard d'un rayonnement lumineux d'une longueur d'onde λ prédéterminée.

Par « partiellement transparent », il est entendu qu'une fraction d'un rayonnement lumineux incident I sur une face avant 24 du miroir est réfléchie par ladite face, tandis qu'une autre fraction traverse en partie le miroir, et en ressort sous forme d'un rayonnement transmis T, par une face arrière 25 opposée à la face avant 24.

Les moyens de maintien 21a et 21b peuvent notamment être agencés pour permettre le pivotement du miroir autour d'un ou deux axes pivots.

Le dispositif comprend également des moyens de diffusion et/ou d'absorption 26 configurés pour diffuser et/ou absorber le rayonnement transmis. Les moyens de diffusion et/ou d'absorption 26 limitent notamment la réflexion du rayonnement en direction du miroir 23.

À cet égard, les moyens de diffusion et/ou d'absorption 26 peuvent être disposés en regard et à distance de la face arrière 25 du miroir 23. En particulier, les moyens de maintien 21 s'étendent à partir des moyens de diffusion et/ou d'absorption 26.

Selon un premier mode de mise en œuvre illustré à la figure 1, les moyens de diffusion et/ou d'absorption 26 sont agencés pour absorber le rayonnement transmis.

À cet égard, les moyens 26 peuvent comprendre au moins une couche absorbante 27 (ou empilement de couches absorbantes), par exemple une couche métallique absorbante formée sur une face principale 22 d'un support 20 par exemple un support en silicium.

De manière alternative, la couche absorbante peut comprendre une couche d'une poudre, notamment une couche de poudre de graphite. Au regard d'un rayonnement lumineux de longueur d'onde de 1550 nm, une couche de poudre de graphite est peu, voire pas, transmissive, et présente également un coefficient de réflexion très faible (de l'ordre de 0,5 %).

Toujours de manière alternative, les moyens 26 peuvent comprendre, sur un substrat support (par exemple un substrat support en silicium), et à partir d'une face de ce substrat support, une couche de titane de 200 nm d'épaisseur, une couche de dioxyde de silicium de 270 nm d'épaisseur, une couche de titane de 13 nm d'épaisseur, et une couche de dioxyde de silicium de 250 nm d'épaisseur. Dans ce cas de figure, un rayonnement transmis d'une longueur d'onde égale à 1550 nm sera en partie absorbé par les couches de titane, et très faiblement réfléchi (le coefficient de réflexion est notamment inférieur à 1 %).

Selon un second mode de mise en œuvre illustré à la figure 2, les moyens de diffusion et/ou d'absorption 26 comprennent une plaque pouvant être métallique.

En particulier, cette plaque comprend une face en regard de la face arrière 25, et dont la surface est texturée 28 de manière à repartir le rayonnement transmis. La texturation de la surface peut notamment comprendre la réalisation de motifs en 3 dimensions, par exemple selon une gamme de périodes spatiales ajustées pour diffuser le rayonnement lumineux de longueur d'onde λ. En particulier, les périodes spatiales considérées peuvent être légèrement supérieures à la longueur d'onde λ prédéterminée. Notamment, si la longueur d'onde prédéterminée est égale à 1550 nm, la période spatiale de la texturation peut être comprise entre 2 µm et 5 µm.

La plaque de diffusion peut comprendre une plaque d'aluminium (dont la face en regard de la face arrière 25 est texturée).

La texturation peut également être obtenue en dispersant une poudre d'une granulométrie choisie sur une face d'un substrat support.

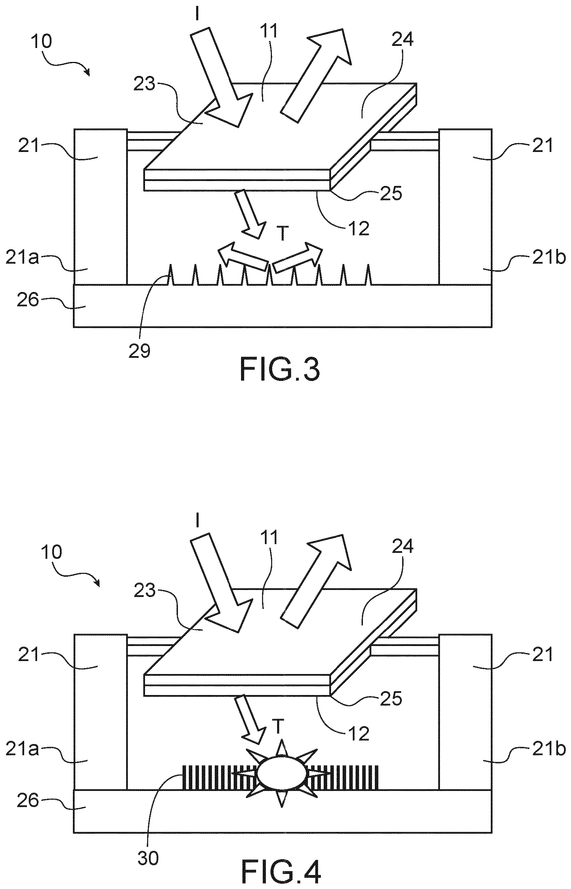

Selon un troisième mode de mise en œuvre illustré à la figure 3, les moyens de diffusion et/ou d'absorption 26 peuvent comprendre une plaque réflective dont une face présente une texturation 29, notamment des formes saillantes à facettes, destinée à dévier le rayonnement transmis selon une autre direction que celle du miroir. Les formes saillantes à facettes peuvent notamment comprendre des pyramides (par exemple à 3 ou 4 facettes).

Selon un quatrième mode de mise en œuvre illustré à la figure 4, les moyens de diffusion et/ou d'absorption 26 peuvent comprendre une couche de nanotubes de carbone 30 formée sur un substrat support, notamment un substrat de silicium.

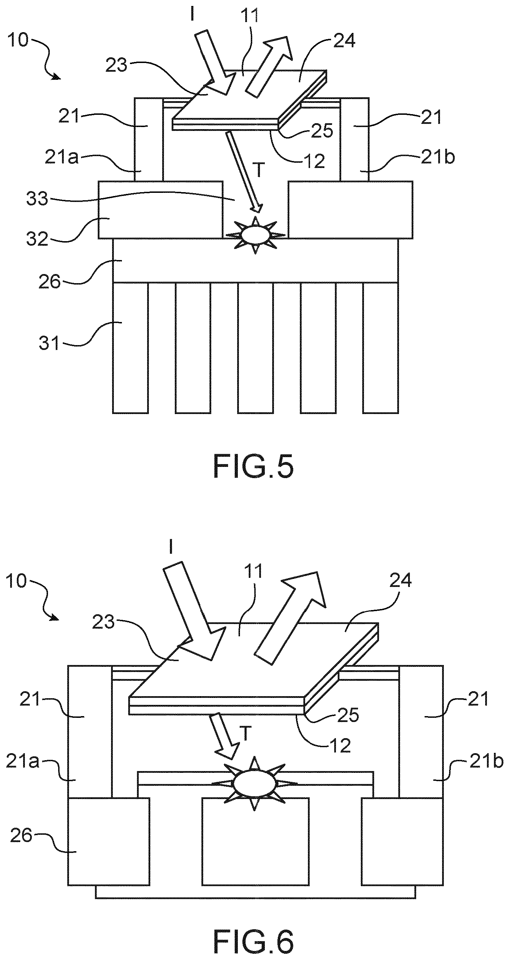

Selon un cinquième mode de réalisation illustré à la figure 5, les moyens de diffusion et/ou d'absorption 26 peuvent comprendre un dissipateur thermique 31, notamment un dissipateur thermique à ailettes en aluminium anodisé.

Le dissipateur thermique 31 peut, en particulier, être couplé au dispositif réflecteur 10 via un support intermédiaire 32.

Le support intermédiaire 32 peut être pourvu d'un évidement 33 permettant au rayonnement transmis d'atteindre le dissipateur thermique 31

Selon un sixième mode de mise en œuvre illustré à la figure 6, les moyens de diffusion et/ou d'absorption 26 comprend un dispositif dissipateur de chaleur sur lequel est formée une couche anti-réflexion.

Le dissipateur de chaleur peut notamment reprendre les caractéristiques du premier ou du cinquième mode de réalisation.

La couche anti-réflexion peut notamment être de l'Aeroglaze Z-306^{®}.

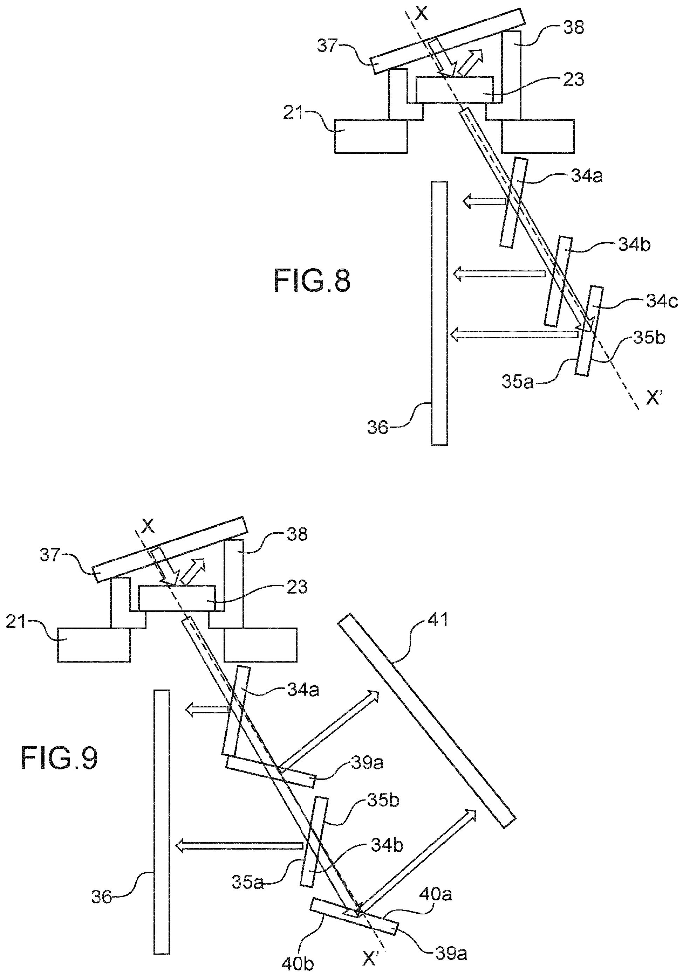

Selon un septième mode de réalisation illustré à la figure 8, les moyens de diffusion 26 comprennent une série de premières lames de prélèvement 34a, 34b, 34c, essentiellement plates ou incurvées, pourvues chacune d'une première face avant 35a et d'une première face arrière 35b opposée à la première face avant 35a.

Les premières lames de prélèvement 34a, 34b, 34c sont notamment alignées selon une direction d'alignement XX', et parallèles les unes aux autres. Ces dernières sont par ailleurs orientées de manière à réfléchir en partie, et en direction d'un premier dissipateur 36 le rayonnement lumineux susceptible d'être transmis par la face arrière 25. Le premier dissipateur 36 peut par exemple être disposé perpendiculairement à la face avant 24 du miroir 23. Les premières lames de prélèvement peuvent être montées pivotantes.

Par ailleurs, les premières lames de prélèvement 34a, 34b, 34c peuvent en outre être partiellement transparentes de sorte que la première face avant 35a de chacune d'entre elles se voit exposée au rayonnement lumineux susceptible d'être transmis par la face arrière 25 et traversant la première lame de prélèvement qui la précède sur le trajet du rayonnement.

Les premières lames peuvent par exemple réfléchir le rayonnement lumineux susceptible d'être émis par la face arrière selon un angle de réflexion soit proche de 45 degrés, soit proche de 90° audit rayonnement lumineux, et en direction du premier dissipateur.

L'intérêt des moyens de dissipation selon ce mode de mise en œuvre, avec des premières lames de prélèvement, est de pouvoir dissiper l'énergie du rayonnement lumineux susceptible d'être transmis par la face arrière en différents points ou différentes régions du premier dissipateur. Ces moyens permettent plus particulièrement « d'étaler » le flux associé au rayonnement lumineux susceptible d'être transmis par la face arrière.

Il est par ailleurs possible d'ajuster cet étalement en ajustant l'espacement entre les premières lames. Par exemple, les premières lames peuvent être de plus en plus resserrées à mesure que l'on s'éloigne de la face arrière.

Ainsi, si l'intensité du rayonnement lumineux susceptible d'être émis par la face arrière est I₀, l'intensité effectivement reçue sur la première face avant d'une première lame de prélèvement donnée est égale à Tⁿ x I₀, où T est le coefficient de transmission d'une première lame de prélèvement et n est le nombre de premières lames de prélèvement précédant la première lame de prélèvement donnée sur le trajet du rayonnement lumineux. Par conséquent, l'ajustement de l'espacement entre premières lames de prélèvement est fonction de T (T est inférieur à 1 par exemple égal à 0,9), de I₀, mais également en fonction de propriété de dissipation thermique de l'au moins un dissipateur.

Ces premières lames peuvent être très transparentes et très peu absorbantes. Par exemple, les premières lames peuvent permettre de réfléchir quelques pourcents (par exemple 8%) d'un rayonnement incident et en transmettre quelques dizaines de pourcents (par exemple 92 %) Les premières lames peuvent comprendre du verre par exemple un verre du type B1664, ou BK7. L'invention n'est toutefois pas limitée à ces deux exemples.

Le miroir 23 peut enfin être surmonté d'une fenêtre transparente 37 disposé sur un socle 38. Le socle 38 peut présenter une ouverture destinée à découvrir la face arrière du miroir 23.

Ainsi, en fonctionnement, le rayonnement lumineux susceptible d'être transmis par une face arrière 25 traverse successivement les premières lames de prélèvement 34a, 34b et 34c. Une partie de ce rayonnement est néanmoins réfléchie par chacune des premières faces avant 35b en direction de l'écran dissipateur 36. La mise en œuvre de plusieurs premières lames de prélèvement selon ce septième mode de réalisation permet ainsi de distribuer en différents endroits de l'écran dissipateur 36 l'énergie à dissiper.

Cette distribution est par ailleurs dépendante de l'espacement entre les premières lames de prélèvement. A cet égard, ces derniers peuvent présenter un espacement décroissant à mesure que l'on s'éloigne de la face arrière.

Les premières lames de prélèvement 34a, 34b, et 34c peuvent comprendre un verre, par exemple du BK7, ou du silicium recouvert d'un empilement de Bragg élémentaire comprenant une couche de dioxyde de silicium et une couche de silicium amorphe.
Les premières lames de prélèvement 34a, 34b, et 34c peuvent être de forme carrée de 5 mm par 5 mm de côté. Le premier dissipateur 36 peut être de forme carrée par exemple de 5 cm par 5 cm de côté.

Le premier dissipateur 36 peut comprendre une couche absorbante non réflectrice, par une couche en poudre, notamment une couche de poudre de graphite sur un support en silicium.

Le dispositif peut également comprendre au moins une première lentille divergente qui s'interpose entre une première face avant (d'une première lame de prélèvement) et le premier dissipateur de manière à étaler le rayonnement réfléchi par ladite première face vers ledit premier dissipateur.

Enfin, l'ensemble formé par le premier dissipateur et les premières lames de prélèvement peut avantageusement être dissocié du micro-miroir et de son support. Cet aspect permet notamment d'améliorer l'efficacité de la dissipation thermique sans risquer de réinjecter cette dernière par conduction au niveau du micro-miroir et/ou de son support.

La figure 9 représente une variante de ce septième mode de réalisation.

Selon cette variante, les moyens de diffusion 26 comprennent une série de deuxièmes lames de prélèvement 39a et 39b, essentiellement plates, pourvus chacune d'une deuxième face avant 40a et d'une deuxième face arrière 40b opposée à la deuxième face avant. Les deuxièmes lames de prélèvement 39a et 39b sont par ailleurs alignées selon la direction d'alignement XX', parallèles les unes aux autres, et orientées de manière à réfléchir en partie, et en direction d'un deuxième dissipateur 41, le rayonnement lumineux susceptible d'être transmis par la face arrière (25).

Toujours selon cette variante, les premières lames de prélèvement 34a, 34b et les deuxièmes lames de prélèvement 39a, 39b sont disposées en alternance le long de la direction d'alignement. Les premières lames de prélèvement peuvent par exemple être perpendiculairement aux deuxièmes lames de prélèvement.

Par ailleurs les premières lames de prélèvement et les deuxièmes lames de prélèvement peuvent comprendre le même matériau.

De manière équivalente, le premier écran dissipateur et le deuxième écran dissipateur peuvent comprendre le même matériau.

Le dispositif peut également comprendre au moins une deuxième lentille divergente qui s'interpose entre une deuxième face avant (d'une deuxième lame de prélèvement) et le deuxième dissipateur de manière à étaler le rayonnement réfléchi par ladite deuxième face vers ledit deuxième dissipateur.

Il est possible selon la présente invention de considérer d'autres séries de lames de prélèvement, par exemple de même nature que les premières lames de prélèvement. Les lames de prélèvement au sien d'une série peuvent également être alignées selon une direction d'alignement, parallèles les unes aux autres, et orientées de manière à réfléchir en partie, et en direction d'un autre dissipateur. Le premier dissipateur, le deuxième dissipateur ainsi que les autres dissipateurs susceptibles d'être considérés peuvent être disposé autour de la direction d'alignement (autrement dit la direction de propagation du rayonnement lumineux issue de la face arrière du micro-miroir). Par exemple, si trois dissipateurs devaient être considérés, la normale de ces derniers pourraient être disposés angulairement à 120° les uns des autres autour de l'axe d'alignement. Il est possible de généraliser ce concept à N dissipateur disposés angulairement à 360°/N autour de l'axe d'alignement.

Quel que soit le mode de mise en œuvre considéré, le couplage des moyens de diffusion et/ou d'absorption 26 avec les moyens de maintien 21a et 21b peut être réalisé par collage.

Notamment, le collage peut être exécuté au moyen d'une colle, ou comprendre un collage métal/métal ou un collage moléculaire.

Le miroir 23 peut comprendre de sa face avant vers sa face arrière, une couche partiellement réfléchissante 11 et une couche support mécanique 12, lesdites couches présentant, chacune, un coefficient d'absorption à la longueur d'onde λ négligeable, avantageusement nul.

Selon une variante particulièrement avantageuse, la couche partiellement réfléchissante 11 peut comprendre un empilement de Bragg (ou miroir de Bragg), l'empilement de Bragg comprenant au moins un empilement de Bragg élémentaire.

Par « empilement de Bragg », on entend une succession périodique de couches transparentes, ou partiellement transparentes, et d'indices de réfraction différents.

Un empilement de Bragg élémentaire comprend un empilement de deux couches diélectriques et/ou semi-conductrices.

En particulier, dès lors que le rayonnement est dans le domaine infrarouge, et plus particulièrement de longueur d'onde égale à 1550 nm en incidence normale, l'empilement de Bragg élémentaire peut comprendre une couche de dioxyde de silicium d'une épaisseur de 305 nm (dont l'indice de réfraction à 1550 nm vaut 1.44) recouverte d'une couche de silicium amorphe d'une épaisseur de 110 nm (dont l'indice de réfraction à 1550 nm vaut 3.42).

Selon cette configuration, un empilement de Bragg ne comprenant qu'un seul empilement de Bragg élémentaire, présentera, pour une incidence de 20°, un coefficient de réflexion égal à 82,4 % et un coefficient de transmission égale à 17,6 % face à un rayonnement lumineux de longueur d'onde égale à 1550 nm. Pour une incidence de 45°, le coefficient de réflexion est de 80,9 % et le coefficient de transmission est de 19,1 %. Cet empilement ne sera par ailleurs pas absorbant et présentera un échauffement quasi nul.

Toujours selon cette configuration, un empilement de Bragg comprenant deux empilements de Bragg élémentaires présentera, pour une incidence du rayonnement de 45° un coefficient de réflexion égal 96,4 % et un coefficient de transmission égal à 3,6 % face à un rayonnement lumineux de longueur d'onde égale à 1550 nm. Cet empilement ne sera par ailleurs que peu ou pas absorbant et présentera un échauffement quasi nul.

Les empilements précités, ainsi que tout autre empilement susceptible d'être mis en œuvre dans le cadre de la présente invention, peuvent être formés sur une couche support mécanique faite par exemple d'un matériau semi-conducteur ou diélectrique.

Le choix du matériau pourra, par exemple, être imposé par la longueur d'onde λ. À titre d'exemple, le coefficient d'absorption d'une couche support mécanique est négligeable, voire nul, pour des longueurs d'onde supérieures à 1250 nm. En d'autres termes, une couche support mécanique faite de silicium monocristallin et d'une épaisseur comprise, notamment entre 20 µm et 100 µm, subira un échauffement non dommageable pour le miroir.

La limitation du nombre d'empilements de Bragg élémentaires permet de réduire les contraintes mécaniques imposées au miroir, et ainsi prévenir toute déformation (par exemple incurvation) dudit miroir.

Par ailleurs, la combinaison d'un tel miroir avec des moyens de dissipation et/ou d'absorption permet également de limiter, voire prévenir, l'échauffement dudit miroir lorsqu'un rayonnement lumineux incident, notamment un rayonnement infrarouge, de forte puissance est mis en œuvre.

Avantageusement, la couche support mécanique peut comprendre un matériau semi-conducteur, avantageusement du silicium, encore plus avantageusement du silicium monocristallin.

La formation d'une couche, dite d'adaptation d'impédance, configurée pour limiter des réflexions internes du rayonnement lumineux au sein du miroir peut également être considérée.

La couche d'adaptation d'impédance peut en particulier comprendre du nitrure de silicium lorsque le support est en silicium.

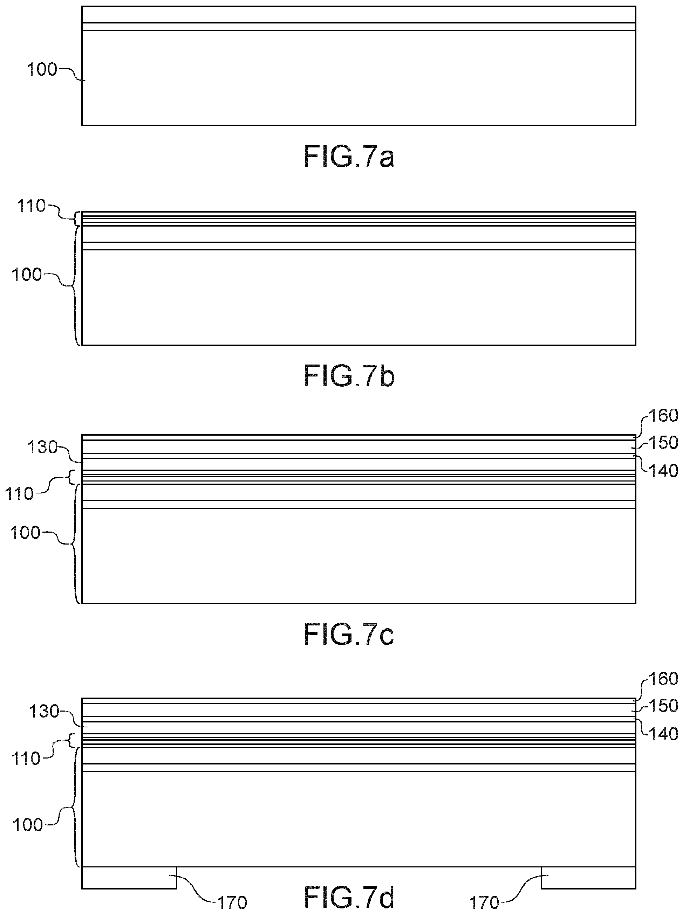

Les figures 7a à 7h illustrent un exemple de procédé de fabrication du miroir 10.

Le procédé comprend notamment une étape a) (figure 7a) qui consiste à fournir un substrat de silicium sur isolant 100 (« SOI »), comprenant une couche de silicium monocristallin en recouvrement d'une couche de dioxyde de silicium formée sur un substrat de silicium monocristallin.

Alternativement, l'étape a) peut comprendre la fourniture d'un substrat massif (par exemple un substrat de silicium) sur une face duquel sont formées successivement, une couche de dioxyde de silicium et une couche de silicium polycristallin.

L'étape a) est suivie d'une étape b) qui comprend la formation d'un empilement de Bragg 110 (figure 7b) sur la couche de silicium du substrat SOI. L'empilement 110 comprend notamment un empilement de Bragg.

L'empilement de Bragg représenté sur cette figure comprend notamment deux empilements de Bragg élémentaires faits chacun faits d'une couche de dioxyde de silicium, de 305 nm d'épaisseur, et de silicium amorphe, de 110 nm d'épaisseur.

L'étape b) est suivie d'une étape c) de formation, et dans l'ordre, d'une couche de protection 130, d'une électrode inférieure 140, d'une couche de PZT 150, et d'une électrode supérieure 160 (figure 7c).

Une étape d) de formation d'un masque dur 170 (« hard mask » selon la terminologie Anglo-Saxonne) est ensuite exécutée (figure 7d). Ce masque dur 170, qui peut notamment comprendre du dioxyde de silicium, est destiné à permettre la libération du miroir par gravure à partir d'une face arrière du substrat SOI.

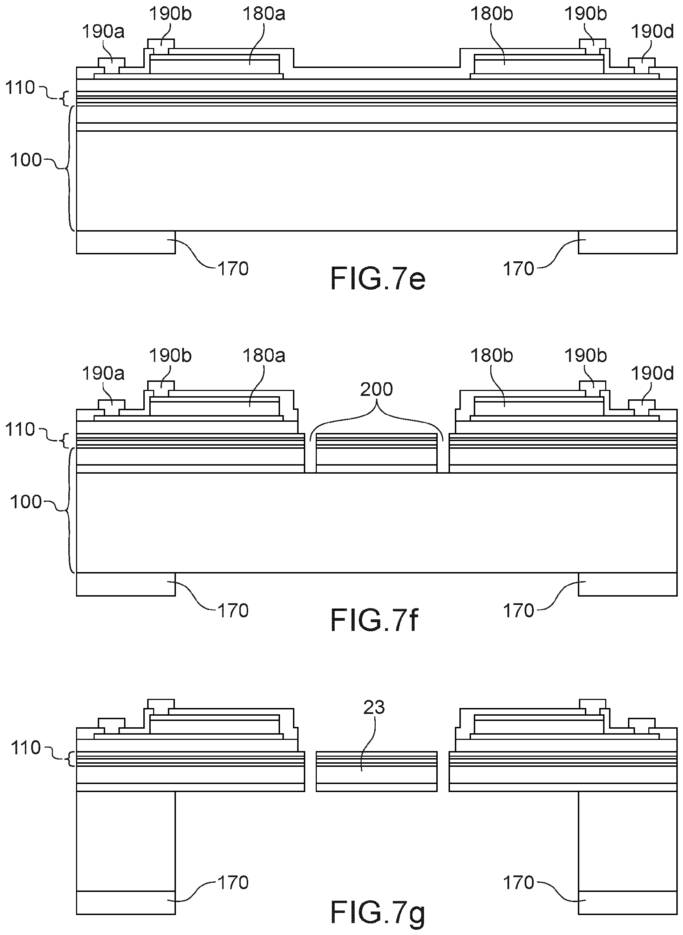

Des motifs d'électrodes 180a et 180b, ainsi que des prises de contact 190a, 190b, 190c et 190d sont formés lors d'une étape e) illustrée à la figure 7e.

Le motif du miroir est ensemble défini par la réalisation de tranchées 200 par une face avant, qui s'étendant jusque dans le support du substrat SOI (figure 7f).

Enfin tel qu'illustré à la figure 7g, une gravure par la face arrière du support du substrat SOI est réaliser pour libérer le miroir.

L'invention n'est pas limitée à un miroir réalisé selon le procédé décrit ci-avant.

### RÉFÉRENCES

[1] Harald Schenk et al., « Micro Mirrors for high-speed Laser Deflection and Patterning", Physics Procedia, 56 (2014) 7-18.

## Revendications

1. Dispositif réflecteur (10) destiné à réfléchir un rayonnement lumineux de longueur d'onde λ, supérieure à 1250 nm, notamment égale à 1550 nm, le dispositif est pourvu d'un support sur lequel sont assemblés :
- un miroir (23) partiellement transparent, et présentant une face avant (24) partiellement réfléchissante ;
- des moyens de diffusion et/ou d'absorption (26) du rayonnement lumineux, disposés en regard et à distance d'une face arrière (25), opposée à la face avant (24), et configurés pour diffuser et/ou absorber, de manière directe, un rayonnement lumineux susceptible d'être transmis par ladite face arrière (25).

2. Dispositif selon la revendication 1, dans lequel les moyens de diffusion et/ou d'absorption comprennent :
- une couche d'absorption, avantageusement la couche d'absorption comprend une couche métallique ou
- une couche présentant une surface exposée texturée, notamment métallique, ou
- une couche formée de nanotubes de carbone, ou
- un dissipateur thermique, ou
- une couche anti-réflexion, et avantageusement disposée sur des moyens configurés pour dissiper de la chaleur.

3. Dispositif selon la revendication 1, dans lequel les moyens de diffusion (26) comprennent une série de premières lames de prélèvement, essentiellement plates, pourvues chacune d'une première face avant et d'une première face arrière opposée à la première face avant, les premières lames de prélèvement étant alignées selon une direction d'alignement, parallèles les unes aux autres, et orientées de manière à réfléchir en partie, et en direction d' un premier dissipateur le rayonnement lumineux susceptible d'être transmis par la face arrière (25).

4. Dispositif selon la revendication 3, dans lequel le premier dissipateur est disposé perpendiculairement à la face avant (24) du miroir (23).

5. Dispositif selon la revendication 3 ou 4, dans lequel les premières lames de prélèvement sont en outre partiellement transparentes de sorte que la première face avant de chacune d'entre se voit exposée au rayonnement lumineux susceptible d'être transmis par la face arrière (25) et traversant la première lame de prélèvement qui la précède sur le trajet du rayonnement.

6. Dispositif selon l'une des revendications 3 à 5, dans lequel les moyens de diffusion (26) comprennent une série de deuxièmes lames de prélèvement, essentiellement plates, pourvues chacune d'une deuxième face avant et d'une deuxième face arrière opposée à la deuxième face avant, les deuxièmes lames de prélèvement étant alignées selon la direction d'alignement, parallèles les uns aux autres, et orientées de manière à réfléchir en partie, et en direction d'un deuxième dissipateur, le rayonnement lumineux susceptible d'être transmis par la face arrière (25).

7. Dispositif selon la revendication 6, dans lequel les premières lames de prélèvement et les deuxièmes lames de prélèvement sont disposées en alternance le long de la direction d'alignement.

8. Dispositif selon la revendication 7, dans lequel les premières lames de prélèvement sont disposées perpendiculairement aux deuxièmes lames de prélèvement.

9. Dispositif selon l'une des revendications 1 à 8, dans lequel le miroir (23) comprend de sa face avant (24) vers sa face arrière (25), une couche partiellement réfléchissante (11) et une couche support mécanique (12), lesdites couches présentant, chacune, un coefficient d'absorption à la longueur d'onde λ inférieur à 0.1%.

10. Dispositif selon la revendication 9, dans lequel la couche partiellement réfléchissante comprend un empilement de Bragg, l'empilement de Bragg comprenant au moins un empilement de Bragg élémentaire, avantageusement, un empilement de Bragg élémentaire comprend un empilement de deux couches diélectriques et/ou semi-conductrices, avantageusement un empilement de Bragg élémentaire comprend une couche de silicium amorphe et une couche d'oxyde de silicium.

11. Dispositif selon la revendication 10, dans lequel l'empilement de Bragg est limité à un ou deux empilements de Bragg élémentaires.

12. Dispositif selon l'une des revendications 9 à 11, dans lequel la couche support mécanique comprend un matériau semi-conducteur, avantageusement du silicium, encore plus avantageusement du silicium monocristallin.

13. Dispositif selon l'une des revendications 1 à 12, dans lequel une couche, dite d'adaptation d'impédance, configurée pour limiter des réflexions internes du rayonnement lumineux au sein du miroir.

14. Dispositif selon l'une des revendications 1 à 13, dans lequel ledit dispositif est un dispositif LIDAR.

## Patentansprüche

1. Reflektorvorrichtung (10), die dazu bestimmt ist, eine Lichtstrahlung mit einer Wellenlänge von λmehr als 1250 nm, insbesondere gleich 1550 nm, zu reflektieren, wobei die Vorrichtung mit einem Träger versehen ist, an dem Folgende angebracht sind:
- ein teilweise transparenter Spiegel (23), der eine teilweise reflektierende Vorderseite (24) besitzt;
- Mittel (26) zur Streuung und/oder Absorption der Lichtstrahlung, die gegenüber und in Entfernung von einer Rückseite (25) angeordnet sind, die der Vorderseite (24) gegenübersteht, und so eingerichtet sind, dass sie eine Lichtstrahlung, die von der Rückseite (25) übertragen werden kann, direkt streuen und/oder absorbieren.

2. Vorrichtung nach Anspruch 1, wobei die Diffusions- und/oder Absorptionsmittel Folgendes umfassen:
- eine Absorptionsschicht, wobei die Absorptionsschicht vorteilhafterweise eine metallische Schicht umfasst oder
- eine Schicht, die eine strukturierte, insbesondere metallische, freiliegende Oberfläche besitzt oder
- eine Schicht, die aus Kohlenstoffnanoröhrchen gebildet ist, oder
- einen Kühlkörper, oder
- eine Antireflexionsschicht, die vorteilhafterweise auf Mitteln angeordnet ist, die so eingerichtet sind, dass sie Wärme ableiten.

3. Vorrichtung nach Anspruch 1, wobei die Diffusionsmittel (26) eine Reihe von ersten, im Wesentlichen flachen Entnahmeklingen umfassen, die jeweils mit einer ersten Vorderseite und einer ersten Rückseite gegenüber der ersten Vorderseite versehen sind, wobei die ersten Entnahmeklingen in einer Ausrichtungsrichtung parallel zueinander ausgerichtet und so gerichtet sind, dass sie die von der Rückseite (25) durchgelassene Lichtstrahlung teilweise in Richtung eines ersten Kühlkörpers reflektieren.

4. Vorrichtung nach Anspruch 3, wobei der erste Kühlkörper senkrecht zu der Vorderseite (24) des Spiegels (23) angeordnet ist.

5. Vorrichtung nach Anspruch 3 oder 4, wobei die ersten Entnahmeklingen ferner teilweise transparent sind, so dass die erste Vorderseite jeder von ihnen der Lichtstrahlung ausgesetzt ist, die von der Rückseite (25) übertragen werden kann und die erste Entnahmeklinge durchdringt, die ihr auf dem Strahlungsweg vorausgeht.

6. Vorrichtung nach einem der Ansprüche 3 bis 5, wobei die Diffusionsmittel (26) eine Reihe von zweiten, im Wesentlichen flachen Entnahmeklingen umfassen, die jeweils mit einer zweiten Vorderseite und einer zweiten Rückseite gegenüber der zweiten Vorderseite versehen sind, wobei die zweiten Entnahmeklingen in Ausrichtungsrichtung parallel zueinander ausgerichtet und so gerichtet sind, dass sie die von der Rückseite (25) durchgelassene Lichtstrahlung teilweise in Richtung eines zweiten Kühlkörpers reflektieren.

7. Vorrichtung nach Anspruch 6, wobei die ersten Entnahmeklingen und die zweiten Entnahmeklingen abwechselnd entlang der Ausrichtungsrichtung angeordnet sind.

8. Vorrichtung nach Anspruch 7, wobei die ersten Entnahmeklingen senkrecht zu den zweiten Entnahmeklingen angeordnet sind.

9. Vorrichtung nach einem der Ansprüche 1 bis 8, wobei der Spiegel (23) von seiner Vorderseite (24) zu seiner Rückseite (25) eine teilweise reflektierende Schicht (11) und eine mechanische Trägerschicht (12) umfasst, wobei die Schichten jeweils einen Wellenlängenabsorptionskoeffizienten von λ weniger als 0,1 % besitzen.

10. Vorrichtung nach Anspruch 9, wobei die teilweise reflektierende Schicht einen Bragg-Stapel umfasst, wobei der Bragg-Stapel mindestens einen elementaren Bragg-Stapel umfasst, wobei ein elementarer Bragg-Stapel vorteilhafterweise einen Stapel aus zwei dielektrischen und/oder halbleitenden Schichten umfasst, wobei ein elementarer Bragg-Stapel vorteilhafterweise eine Schicht aus amorphem Silizium und eine Schicht aus Siliziumoxid umfasst.

11. Vorrichtung nach Anspruch 10, wobei der Bragg-Stapel auf einen oder zwei elementare Bragg-Stapel begrenzt ist.

12. Vorrichtung nach einem der Ansprüche 9 bis 11, wobei die mechanische Trägerschicht ein Halbleitermaterial, vorteilhafterweise Silizium, noch vorteilhafter monokristallines Silizium, umfasst.

13. Vorrichtung nach einem der Ansprüche 1 bis 12, wobei eine Impedanzanpassungsschicht so eingerichtet ist, dass sie innere Reflexionen der Lichtstrahlung innerhalb des Spiegels begrenzt.

14. Vorrichtung nach einem der Ansprüche 1 bis 13, wobei die Vorrichtung eine LIDAR-Vorrichtung ist.

## Claims

1. Reflector device (10) intended to reflect luminous radiation of wavelength λ, greater than 1250 nm, particularly equal to 1550 nm, the device is provided with a supporting base whereon are assembled:
- a partially transparent mirror (23), having a partially reflective front face (24);
- luminous radiation scattering and/or absorption means (26), disposed facing and away from the rear face (25), opposite the front face (24), configured to scatter and/or absorb, directly, luminous radiation liable to be transmitted by said rear face (25).

2. Device according to claim 1, wherein the scattering and/or absorption means comprise:
- an absorption layer, advantageously the absorption layer comprises a metallic layer or
- a layer having a textured exposed surface, particularly metallic, or
- a layer formed of carbon nanotubes, or
- a heat sink, or
- an anti-reflective layer, and advantageously disposed on means configured to dissipate heat.

3. Device according to claim 1, wherein the scattering means (26) comprise a series of first collection strips, essentially flat, each provided with a first front face and a first rear face opposite the first front face, the first collection strips being aligned along an alignment direction, parallel with one another, and oriented so as to partially reflect, toward a first dissipator, the luminous radiation liable to be transmitted by the rear face (25).

4. Device according to claim 3, wherein the first dissipator is disposed perpendicularly to the front face (24) of the mirror (23).

5. Device according to claim 3 or 4, wherein the first collection strips are furthermore partially transparent such that the first front face of each thereof is exposed to the luminous radiation liable to be transmitted by the rear face (25) and traversing the first collection strip preceding same on the path of the radiation.

6. Device according to one of claims 3 to 5, wherein the scattering means (26) comprise a series of second collection strips, essentially flat, each provided with a second front face and a second rear face opposite the second front face, the second collection strips being aligned along the alignment direction, parallel with one another, and oriented so as to partially reflect, toward a second dissipator, the luminous radiation liable to be transmitted by the rear face (25).

7. Device according to claim 6, wherein the first collection strips and the second collection strips are disposed in alternation along the alignment direction.

8. Device according to claim 7, wherein the first collection strips are disposed perpendicularly to the second collection strips.

9. Device according to one of claims 1 to 8, wherein the mirror (23) comprises from the front face (24) thereof to the rear face (25) thereof, a partially reflective layer (11) and a mechanical supporting base layer (12), said layers having, each, an absorption coefficient at the wavelength λ less than 0.1%.

10. Device according to claim 9, wherein the partially reflective layer comprises a Bragg stack, the Bragg stack comprising at least one elementary Bragg stack, advantageously, an elementary Bragg stack comprises a stack of two dielectric and/or semiconductor layers, advantageously an elementary Bragg stack comprises a layer of amorphous silicon and a layer of silicon oxide.

11. Device according to claim 10, wherein the Bragg stack is limited to one or two elementary Bragg stacks.

12. Device according to one of claims 9 to 11, wherein the mechanical supporting base layer comprises a semiconductor material, advantageously silicon, even more advantageously monocrystalline silicon.

13. Device according to one of claims 1 to 12, wherein a so-called impedance matching layer is configured to limit internal reflections of the luminous radiation within the mirror.

14. Device according to one of claims 1 to 13, wherein said device is a LIDAR device.
